# FASCICULE DE BREVET EUROPEEN

(11) **EP 3 718 301 B1**
(45) Date de publication et mention de la délivrance du brevet: **23.08.2023**
(21) Numéro de dépôt: 18816182.2
(22) Date de dépôt: 13.11.2018
(51) Int. Cl.: H04N 7/14, H04N 7/15, H04L 65/403, H04L 65/1089, H04L 65/75

(54) **COMMUNICATION PAR VIDÉO CONFÉRENCE**
VIDEOKONFERENZKOMMUNIKATION
VIDEO CONFERENCE COMMUNICATION

(30) Priorité: 27.11.2017 FR 1761217
(43) Date de publication de la demande: 07.10.2020
(73) Titulaire: Orange, 92130 Issy-les-Moulineaux (FR)
(72) Inventeur: GODIER, Julien, 92326 Châtillon Cedex (FR); FERRIEUX, Alexandre, 92326 Châtillon Cedex (FR); HAMEL, Matthias, 92326 Châtillon Cedex (FR)
(86) Numéro de dépôt international: PCT/FR2018/052822
(87) Numéro de publication internationale: WO 2019/102105

(56) Documents cités:
- US-A1- 2005 099 492
- US-A1- 2007 211 141
- US-A1- 2012 182 381
- US-A1- 2014 114 664

## Description

### Domaine de l'invention

Le domaine général de l'invention est celui des télécommunications.

L'invention concerne plus particulièrement la mise en oeuvre de communications par vidéo conférence et/ou visiophonie entre N terminaux, tel que N≥2.

### Etat de la technique

Actuellement, les systèmes de communication par vidéo conférence multipoint utilisent un pont de gestion de vidéo conférence auquel se connectent, via un réseau de communication, N terminaux qui sont associés respectivement à N utilisateurs invités à une vidéo conférence.

Au cours de la vidéo conférence, le pont de gestion de vidéo conférence reçoit, à un instant courant, N flux audio vidéo émis respectivement par les N terminaux. Il met en oeuvre une analyse de ces flux afin de détecter quel est l'utilisateur qui parle de façon prépondérante ou dont la prise de parole est la plus active. Puis, pour un utilisateur donné, le pont renvoie vers le terminal de cet utilisateur l'ensemble des flux audio vidéo reçus, éventuellement à l'exception du flux audio vidéo qui a été reçu en provenance du terminal de l'utilisateur donné, de telle façon que le flux audio vidéo associé à l'utilisateur qui parle de façon prépondérante à l'instant courant soit affiché sur l'écran du terminal de l'utilisateur donné d'une manière qui le distingue des autres flux qui s'affichent. Ainsi, le flux audio vidéo associé à l'utilisateur qui parle de façon prépondérante peut être affiché dans une fenêtre plus grande que celles dans lesquelles sont affichés les autres flux ou bien peut être affiché en surbrillance, au centre de l'écran, etc... Une telle opération est mise en oeuvre par le pont de gestion de vidéo conférence pour chacun des N utilisateurs.

Par exemple, le document US2007/211141 A1 (CHRISTIANSEN BERND) propose des systèmes et procédés pour transmettre et afficher simultanément tous les flux vidéo dans une vidéoconférence en adaptant dynamiquement des flux vidéo en fonction du volume audio des participants, qui comprennent l'allocation d'une quantité de bande passante à un participant dans une vidéoconférence; une détermination d'un niveau d'activité présenté par le participant pendant la visioconférence, et une modification de la quantité de bande passante allouée au participant en fonction du niveau d'activité déterminé. Le document US2007/211141 A1 (CHRISTIANSEN BERND) propose également un procédé pour afficher des flux vidéo comprenant la création d'une représentation graphique d'un participant à une vidéoconférence; un affichage de la représentation graphique créée; une détermination d'un niveau d'activité présenté par le participant pendant la visioconférence; et une modification de la représentation graphique affichée du participant en réponse au niveau d'activité déterminé.

La détection de l'utilisateur qui parle de façon prépondérante utilise des mécanismes de détection d'activité vocale à partir des paquets de données audio extraits de chaque flux audio vidéo reçu par le pont à l'instant courant.

Un inconvénient d'un tel système de vidéo conférence réside dans le fait que la mise en oeuvre de la détection d'activité vocale n'est pas toujours suffisamment précise, ce qui engendre un affichage de mauvaise qualité du flux audio vidéo de l'utilisateur qui parle, soit parce qu'un autre utilisateur se met à parler en même temps à l'instant courant, soit parce que l'utilisateur qui a été détecté comme étant celui qui parle le plus fait une pose vocale ou bien tousse au cours de sa prise de parole, etc... Ainsi, à l'écran, l'affichage du flux audio vidéo de l'utilisateur qui parle le plus peut présenter des suroscillations ou des artefacts non souhaités, qui ne permettent pas aux utilisateurs de suivre toujours correctement la vidéo conférence et dans de bonnes conditions de fonctionnement.

Enfin, les mécanismes de détection d'activité vocale et de retransmission des flux audio vidéo à afficher, tenant compte du résultat de la détection d'activité vocale, sont propres au pont de gestion de vidéo conférence, chacun des N terminaux impliqués dans la vidéo conférence mettant en oeuvre l'affichage de flux audio vidéo de façon uniforme. Ainsi, il n'est pas possible pour un terminal donné de traiter individuellement la gestion de l'affichage des flux audio vidéo associés aux autres utilisateurs en fonction du résultat de la détection d'activité vocale.

### Objet et résumé de l'invention

Un des buts de l'invention est donc de remédier à des insuffisances/inconvénients de l'état de la technique et/ou d'y apporter des améliorations.

A cet effet, un objet de la présente invention concerne un procédé de communication par vidéo conférence entre N terminaux de communication, tel que N>2, associés respectivement à N utilisateurs comme exposé dans le jeu de revendications joint.

Un tel procédé est remarquable en ce qu'il met en oeuvre ce qui suit, au niveau d'un premier terminal de communication parmi les N terminaux:
- recevoir, en provenance d'un dispositif de traitement de N flux audio vidéo émis respectivement par les N terminaux, N informations relatives respectivement à l'activité vocale des N utilisateurs et associées respectivement à N identifiants relatifs auxdits N utilisateurs correspondants, chacune des N informations prenant une première valeur représentative de la présence d'activité vocale ou une deuxième valeur représentative de l'absence d'activité vocale,
- pour au moins un des N utilisateurs, si l'information reçue est à la première valeur depuis une première durée, requérir auprès du dispositif de traitement, en utilisant l'identifiant utilisateur correspondant audit au moins un des N utilisateurs, un flux audio vidéo associé audit au moins un des N utilisateurs, en tant que flux audio vidéo principal à afficher,
- recevoir le flux audio vidéo principal requis,
- afficher le flux audio vidéo reçu en tant que flux audio vidéo principal.

Grâce à l'invention, il est possible, pour tout terminal qui communique par vidéo conférence, de continuer à afficher le flux audio vidéo associé à l'utilisateur qui parle, même si ce dernier s'est arrêté quelques secondes de parler ou s'est par exemple mis à tousser, évitant ainsi tout phénomène de suroscillation ou d'artéfacts lors de l'affichage de ce flux audio vidéo.

En outre, le fait que l'information relative à l'activité vocale soit traitée au niveau d'un terminal de communication participant à la vidéo conférence, plutôt qu'au niveau du pont de gestion de vidéo conférence, permet de personnaliser le contenu de la requête en affichage des flux audio vidéo de chacun des N utilisateurs qui est envoyée au pont de vidéo conférence, de même que l'affichage des flux audio vidéo reçus en provenance du pont. Ainsi, un terminal pourra par exemple requérir les N flux audio vidéo associés respectivement aux N utilisateurs, tandis qu'un autre terminal pourra requérir uniquement le flux audio vidéo de l'utilisateur qui parle de façon prépondérante. Au niveau de l'affichage, un terminal pourra par exemple choisir d'afficher uniquement l'utilisateur qui parle de façon prépondérante en plein écran, tandis qu'un autre terminal pourra choisir d'afficher l'utilisateur qui parle de façon prépondérante, par exemple en gros plan, au centre de l'écran, et les N-1 autres utilisateurs en périphérie de l'écran, dans des fenêtres plus petites.

Selon un mode de réalisation particulier, si pour au moins deux premier et deuxième utilisateurs parmi les N utilisateurs, l'information d'activité vocale reçue correspondante est à la première valeur depuis l'instant prédéterminé,
- comparer l'instant à partir duquel l'information reçue pour le premier utilisateur est passée de la deuxième valeur à la première valeur et l'instant à partir duquel l'information reçue pour le deuxième utilisateur est passée de la deuxième valeur à la première valeur,
- requérir auprès du dispositif de traitement, en tant que flux audio vidéo principal à afficher, un flux audio vidéo associé à celui des premier et deuxième utilisateurs pour lequel l'information est passée de la deuxième valeur à la première valeur à l'instant le plus proche de l'instant courant, en utilisant l'identifiant utilisateur correspondant,
- recevoir le flux audio vidéo principal requis,
- afficher le flux audio vidéo reçu en tant que flux audio vidéo principal.

De façon avantageuse, tout terminal est ainsi apte à mettre en oeuvre individuellement un mécanisme de gestion de priorité pour, à l'instant courant, sélectionner avec précision à l'instant courant l'utilisateur qui est considéré comme parlant de façon prépondérante, lorsqu'au moins deux utilisateurs parlent en même temps.

Selon un mode de réalisation particulier, le procédé de communication comprend en outre ce qui suit :
- recevoir, en provenance du dispositif de traitement de flux audio vidéo, N-1 flux audio vidéo associés respectivement aux N-1 utilisateurs restants, en tant que N-1 flux audio vidéo secondaires à afficher,
- afficher lesdits N-1 flux audio vidéo secondaires simultanément au flux audio vidéo principal.

L'invention permet d'afficher sur le terminal de communication donné le flux audio vidéo principal requis par celui-ci, simultanément aux N-1 autres flux audio vidéo associés respectivement aux N-1 autres utilisateurs participant à la conférence. Les N-1 flux audio vidéo sont considérés comme secondaires en ce sens qu'ils sont affichés de façon moins visible que le flux audio vidéo principal requis par le terminal de communication donné.

Selon un mode de réalisation particulier, uniquement le flux audio vidéo principal est reçu et affiché par le terminal de communication donné.

Un tel mode de réalisation permet de réaliser une économie de ressources en bande passante non négligeable, puisque un terminal donné ne requiert auprès du pont de vidéo conférence que le flux audio vidéo principal associé à l'utilisateur qui parle de façon prépondérante.

Selon un mode de réalisation particulier, si à un instant courant, il est déterminé que l'information reçue relative à l'activité vocale de chacun des N utilisateurs est à la deuxième valeur représentative de l'absence d'activité vocale, depuis un instant prédéterminé précédant l'instant courant, le flux audio vidéo principal affiché à l'instant qui précède immédiatement l'instant courant continue d'être affiché.

Grâce à un tel mode de réalisation, aucun message supplémentaire n'a besoin d'être envoyé par le terminal de communication donné au dispositif de traitement de flux audio vidéo, ce qui permet avantageusement d'économiser les ressources du réseau de communication, jusqu'à la prochaine prise de parole d'un des utilisateurs et l'envoi d'un nouveau message par le terminal de communication au dispositif de traitement de flux.

Les différents modes ou caractéristiques de réalisation précités peuvent être ajoutés indépendamment ou en combinaison les uns avec les autres, au procédé de communication par vidéo conférence tel que défini ci-dessus.

L'invention concerne également un terminal de communication par vidéo conférence avec au moins un autre terminal de communication, les deux terminaux appartenant à un ensemble de N terminaux de communication, tel que N≥2, associés respectivement à N utilisateurs comme exposé dans le jeu de revendications joint.

Un tel terminal est remarquable en ce qu'il comprend un module de traitement qui est agencé pour, à un instant courant:
- recevoir, en provenance d'un dispositif de traitement de N flux audio vidéo émis respectivement par les N terminaux, N informations relatives respectivement à l'activité vocale des N utilisateurs et associées respectivement à N identifiants relatifs auxdits N utilisateurs correspondants, chacune des N informations prenant une première valeur représentative de la présence d'activité vocale ou une deuxième valeur représentative de l'absence d'activité vocale,
- pour au moins un des N utilisateurs, déterminer si l'information reçue est à la même valeur ou pas depuis un instant prédéterminé précédant l'instant courant,
- uniquement si l'information reçue est à la première valeur depuis l'instant prédéterminé, requérir auprès du dispositif de traitement, en utilisant l'identifiant utilisateur correspondant audit au moins un des N utilisateurs, un flux audio vidéo associé audit au moins un des N utilisateurs, en tant que flux audio vidéo principal à afficher,
- recevoir le flux audio vidéo principal requis,
- afficher le flux audio vidéo reçu en tant que flux audio vidéo principal.

Selon un mode de réalisation particulier, le module de traitement met en oeuvre ce qui suit :
- si pour au moins deux premier et deuxième utilisateurs parmi les N utilisateurs, l'information d'activité vocale reçue correspondante est à la première valeur depuis l'instant prédéterminé,
   - comparer l'instant à partir duquel l'information reçue pour le premier utilisateur est passée de la deuxième valeur à la première valeur et l'instant à partir duquel l'information reçue pour le deuxième utilisateur est passée de la deuxième valeur à la première valeur,
   - requérir auprès du dispositif de traitement, en tant que flux audio vidéo principal à afficher, un flux audio vidéo associé à celui des premier et deuxième utilisateurs pour lequel l'information est passée de la deuxième valeur à la première valeur à l'instant le plus proche de l'instant courant, en utilisant l'identifiant utilisateur correspondant,
   - recevoir le flux audio vidéo principal requis,
   - afficher le flux audio vidéo reçu en tant que flux audio vidéo principal.

Selon un mode de réalisation particulier, le module de traitement met en oeuvre ce qui suit :
- recevoir, en provenance du dispositif de traitement de flux audio vidéo, N-1 flux audio vidéo associés respectivement aux N-1 utilisateurs restants, en tant que N-1 flux audio vidéo secondaires à afficher,
- afficher les N-1 flux audio vidéo secondaires simultanément au flux audio vidéo principal.

Selon un mode de réalisation particulier, uniquement le flux audio vidéo principal est reçu et affiché.

Selon un mode de réalisation particulier, si à un instant courant, le module de traitement détermine que l'information reçue relative à l'activité vocale de chacun des N utilisateurs est à la deuxième valeur représentative de l'absence d'activité vocale, depuis un instant prédéterminé précédant l'instant courant, le flux audio vidéo principal affiché à l'instant qui précède immédiatement l'instant courant continue d'être affiché.

L'invention concerne également un programme d'ordinateur pour mettre en oeuvre des instructions de code de programme pour l'exécution des étapes du procédé de communication par vidéo conférence selon l'invention, lorsque le programme est exécuté dans un terminal de communication.

Un tel programme peut utiliser n'importe quel langage de programmation et être sous la forme de code source, code objet, ou de code intermédiaire entre code source et code objet, tel que dans une forme partiellement compilée, ou dans n'importe quelle autre forme souhaitable.

L'invention concerne également un support d'enregistrement lisible par un ordinateur sur lequel est enregistré un programme d'ordinateur, ce programme comportant des instructions adaptées à la mise en oeuvre des étapes du procédé de communication par vidéo conférence selon l'invention, lorsque le programme est exécuté dans un terminal de communication tel que mentionné ci-dessus.

Les supports d'enregistrement peuvent être n'importe quelle entité ou dispositif capable de stocker le programme. Par exemple, le support peut comporter un moyen de stockage, tel qu'une ROM, par exemple un CD ROM ou une ROM de circuit microélectronique, une clé USB ou encore un moyen d'enregistrement magnétique, par exemple un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé d'établissement de communication précité.

### Brève description des dessins

D'autres caractéristiques et avantages apparaîtront à la lecture de plusieurs modes de réalisation particuliers de l'invention, donnés à titre de simples exemples illustratifs et non limitatifs, et des dessins annexés, parmi lesquels :
- la figure 1 est une vue schématique et générale d'une architecture dans laquelle est mis en oeuvre le procédé de communication par vidéo conférence dans un mode de réalisation particulier de l'invention,
- la figure 2 représente un terminal de communication de vidéo conférence dans un mode de réalisation particulier de l'invention,
- les figures 3A à 3C représentent les principales étapes d'un procédé de communication par vidéo conférence dans un mode de réalisation particulier de l'invention,
- les figures 4A à 4C représentent respectivement trois modes d'affichage mis en oeuvre dans le procédé de communication par vidéo conférence des figures 3A à 3C.

### Description détaillée d'un mode particulier de réalisation

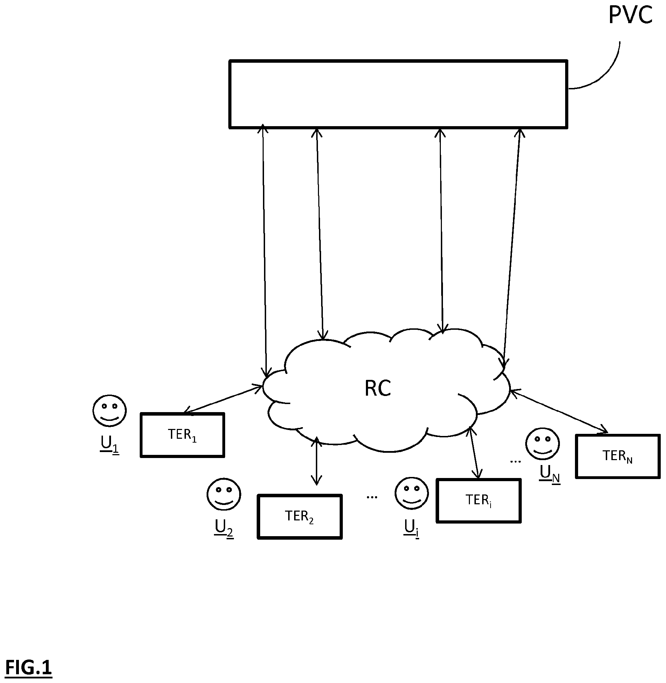

La figure 1 représente un environnement dans lequel est mis en oeuvre le procédé de communication par vidéo conférence selon l'invention.

Dans un souci de clarté de la figure 1, certains éléments bien connus de cet environnement ne sont pas représentés. De tels éléments sont par exemple des serveurs, des noeuds, des stations de base, des passerelles ou encore d'autres entités du réseau de télécommunications utilisé dans cet environnement.

Sur la figure 1 sont représentés :
- un dispositif de traitement de flux audio vidéo PVC, tel que par exemple un pont de gestion de vidéo conférence,
- un ensemble de N terminaux de communication TER₁, TER₂, ..., TERᵢ,...,TERⱼ,.., TERₖ,..., TER_{N}, tel que 1≤i≤j≤k≤N, associés respectivement à N utilisateurs U₁, U₂, ..., Uᵢ,...,Uⱼ,..., Uₖ,..., U_{N} et aptes à se connecter au pont PVC, via un réseau de communication RC tel que par exemple de type IP (abréviation anglaise de « Internet Protocol »).

Chaque terminal de communication comprend une interface de connexion au réseau de communication RC, via par exemple un réseau local (non représenté), par exemple sans fil, en particulier du type WiFi ou CPL (abréviation de « courants porteurs en ligne »). En variante, l'interface de connexion est par exemple, de type x-DSL, fibre ou encore 3G, 4G, 5G, etc.... Un exemple d'interface de connexion est un navigateur web.

Un terminal de communication donné TERᵢ est par exemple à titre non exhaustif :
- un téléphone portable, et/ou
- un smartphone (« téléphone intelligent »), et/ou
- une tablette, et/ou
- un ordinateur portable, et/ou
- un ordinateur personnel de type PC, et/ou
- une télévision connectée,
- etc....

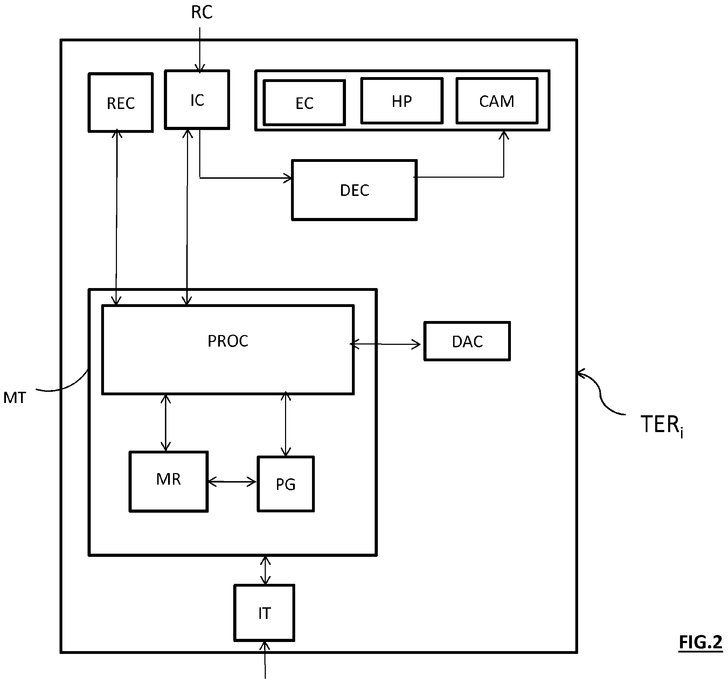

En relation avec la figure 2, on considère maintenant la structure simplifiée d'un terminal de communication donné TERᵢ selon un exemple de réalisation de l'invention.

De façon connue en soi, le terminal de communication TERᵢ comprend :
- une interface de connexion IC qui est adaptée pour communiquer, via le réseau de communication RC, selon par exemple le protocole http (abréviation anglaise de « HyperText Transfer Protocol »), avec le pont de gestion de vidéo conférence PVC de la figure 1,
- un module de réception REC de flux audio vidéo émis en provenance du pont de gestion de vidéo conférence,
- une interface IT de traitement des interactions utilisateurs,
- un écran de visualisation EC,
- un haut-parleur HP,
- une caméra CAM,
- une interface DEC de décodage audio/vidéo des contenus de type texte, audio, vidéo ou audiovisuel, ladite interface étant adaptée pour transmettre les signaux décodés à l'écran EC ou dans le haut-parleur HP.

Le terminal de communication TERᵢ comprend des ressources physiques et/ou logicielles, en particulier un module de traitement MT pour mettre en oeuvre le procédé de communication par vidéo conférence selon l'invention, qui va être décrit ci-dessous.

Le module de traitement MT contient un processeur PROC piloté par un programme d'ordinateur PG.

A l'initialisation, les instructions de code du programme d'ordinateur PG sont par exemple chargées dans une mémoire RAM, notée MR, avant d'être exécutées par le module de traitement MT.

Selon l'invention, le terminal de communication TERᵢ comprend également un module DAC de détection d'activité vocale piloté par le processeur PROC du module de traitement MT.

Précisons ici que le terme module utilisé dans la présente demande peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

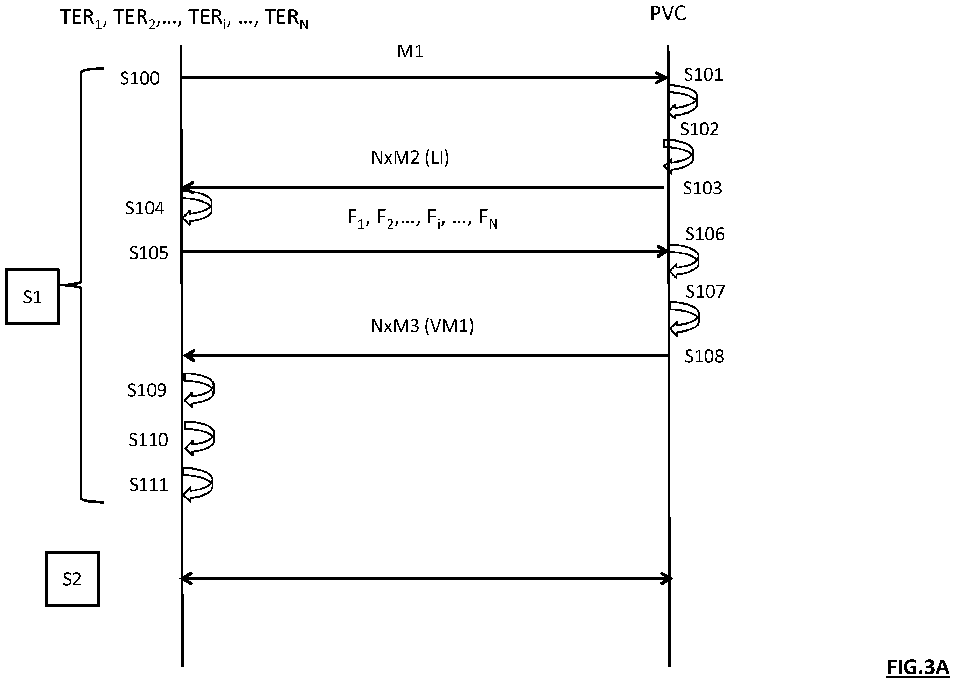

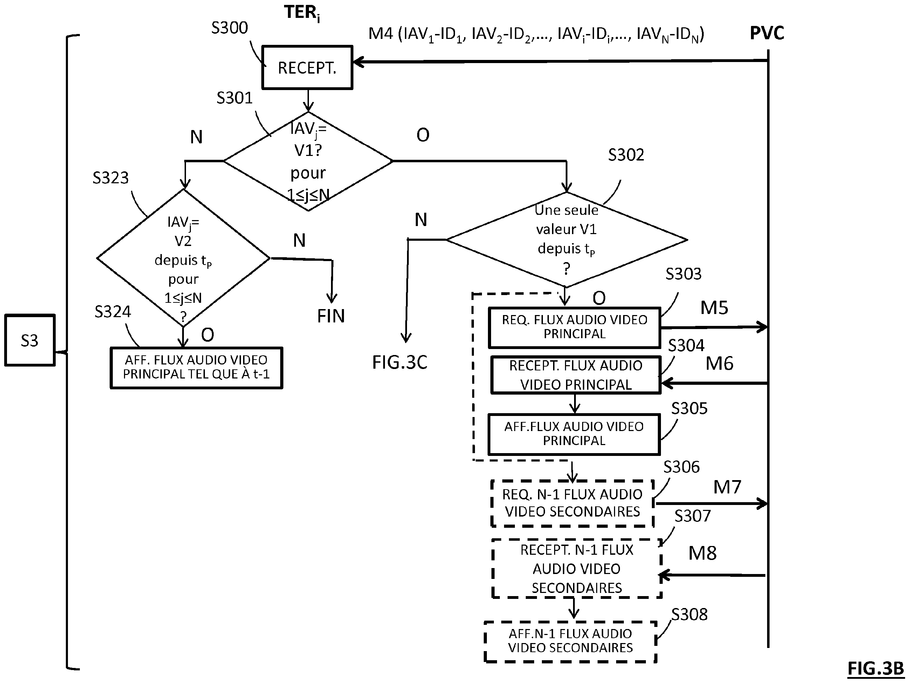

En référence aux figures 3A et 3B, on décrit maintenant le déroulement d'un procédé de communication par vidéo conférence selon l'invention, mettant en oeuvre une détection d'activité vocale implémentée dans au moins un des terminaux de communication TER₁, TER₂, ..., TERᵢ,...,TERⱼ,..., TERₖ,..., TER_{N} de la figure 1, tel que par exemple le terminal de communication TERᵢ représenté sur la figure 2.

Le procédé de communication par vidéo conférence met d'abord en oeuvre une initialisation S1 de la vidéo conférence. A cet effet, en référence à la figure 3A, un des terminaux de communication TER₁, TER₂, ..., TERᵢ,...,TERⱼ,..., TERₖ,..., TER_{N} de la figure 1 envoie, en S100, au pont de gestion de vidéo conférence PCV, via le réseau RC, un message M1 de demande de création d'une vidéo conférence, ledit message M1 comprenant classiquement un identifiant associé au terminal qui envoie le message et un identifiant associé à chaque terminal d'un utilisateur invité à la vidéo conférence.

A titre d'exemples non exhaustifs, un tel identifiant peut être :
- l'identifiant d'appel MSISDN correspondant de manière unique à la carte SIM (en anglais « Subscriber Identity Module ») qui est fournie par l'opérateur du réseau de communication auprès duquel s'est inscrit l'utilisateur d'un des N terminaux de communication,
- un identifiant URI (abréviation anglaise de « Uniform Resource Identifier »),
- une adresse de messagerie électronique,
- etc...

Ainsi, les N terminaux TER₁, TER₂, ..., TERᵢ,...,TERⱼ,..., TERₖ,..., TER_{N} sont associés respectivement à N identifiants ID₁, ID₂, ..., IDᵢ,..., IDⱼ,..., IDₖ,..., ID_{N} du type précité. On suppose par exemple que les N terminaux de communication participent à la vidéo conférence requise par le terminal requérant.

En S101, le pont de gestion de vidéo conférence PVC reçoit le message M1.

En S102, le pont de gestion de vidéo conférence PVC extrait les identifiants ID₁, ID₂, ..., IDᵢ,..., ID_{N} du message M1.

En S103, le pont de gestion de vidéo conférence PVC envoie un message M2 d'invitation à la vidéo conférence proposée par le terminal de communication requérant à chaque terminal de communication associé à un identifiant correspondant extrait en S102. Le message M2 contient un lien Internet (LI) vers la vidéo conférence à établir.

En S104, chacun des N terminaux reçoit le message M2.

En S105, chacun des N terminaux se connecte au pont de vidéo conférence PVC à l'aide du lien Internet contenu dans le message M2. A cet effet, les N terminaux envoient respectivement, à destination du pont de gestion de vidéo conférence PCV, N flux audio vidéo F₁, F₂, ..., Fᵢ,...,Fⱼ,..., Fₖ,..., F_{N} représentant respectivement les N utilisateurs U₁, U₂, ..., Uᵢ,..., Uⱼ,..., Uₖ,..., U_{N} de ces terminaux.

En S106, le pont de gestion de vidéo conférence PVC reçoit les N flux audio vidéo F₁, F₂, ..., Fᵢ,..., Fⱼ,..., Fₖ,..., F_{N}.

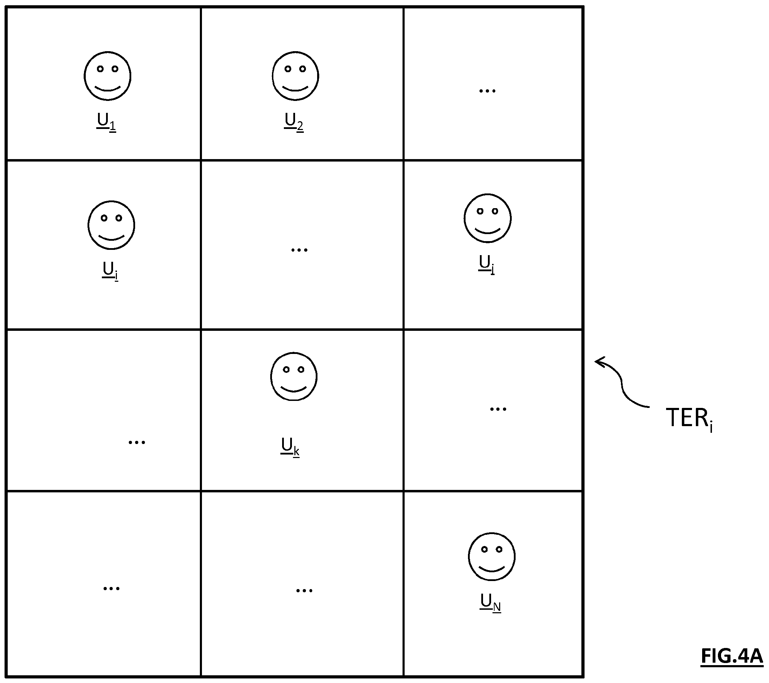

En S107, le pont de gestion de vidéo conférence PVC génère une vidéo mosaïque VM1 contenant les N flux audio vidéo reçus en S106. Comme représenté sur la figure 4A, la vidéo mosaïque VM1 est configurée de façon à ce que, en début de vidéo conférence, les N flux audio vidéo soient affichés sur l'écran EC (figure 2) d'un terminal de communication donné TERᵢ, dans respectivement N fenêtres de même taille.

En S108, le pont de gestion de vidéo conférence PVC transmet un message M3 à chacun des N terminaux invités, le message M3 contenant la vidéo mosaïque VM1.

En S109, chacun des N terminaux de communication reçoit le message M3.

En S110, le décodeur DEC de chacun des N terminaux de communication décode la vidéo mosaïque VM1 contenue dans le message M3 reçu.

En S111, les N flux audio vidéo sont affichés sur l'écran EC de chacun des N terminaux, respectivement dans N fenêtres de même taille.

Conformément à l'invention, lors de l'initialisation S1, chacun des N terminaux procède, en S2, à un téléchargement depuis le pont de gestion de vidéo conférence PVC, d'une procédure de détection d'activité vocale de chacun des N utilisateurs.

Un tel téléchargement est transparent pour les utilisateurs U₁ à U_{N}. Pour un terminal de communication donné TERᵢ, la procédure de détection d'activité vocale est téléchargée dans le module DAC de détection d'activité vocale tel que représenté sur la figure 2.

La procédure de détection d'activité vocale est par exemple encapsulée dans le message d'invitation M2 envoyé en S103 à chacun des N terminaux ou encore dans le message M3 envoyé en S108. Selon un autre mode de réalisation, la procédure de détection d'activité vocale est téléchargée automatiquement par chacun des N terminaux lors de la connexion S105 de ces derniers au pont de gestion de vidéo conférence PVC.

Une fois que l'initialisation S1 de la vidéo conférence et que le téléchargement S2 sont terminés, conformément à l'invention et en référence à la figure 3B, une détection d'activité vocale S3 d'au moins un des N utilisateurs est mise en oeuvre à un instant courant, individuellement, dans chacun des N terminaux de communication participant à la vidéo conférence.

Pour un terminal de communication donné TERᵢ, la détection d'activité vocale S3 se déroule comme suit à un instant courant t.

En S300, le terminal TERᵢ reçoit, en provenance du pont de gestion de vidéo conférence PCV, via le réseau RC, un message M4 qui contient ;
- une information IAV₁ relative à l'activité vocale de l'utilisateur U₁ en association avec l'identifiant ID₁,
- une information IAV₂ relative à l'activité vocale de l'utilisateur U₂ en association avec l'identifiant ID₂,
- ...,
- une information IAVᵢ relative à l'activité vocale de l'utilisateur Uᵢ en association avec l'identifiant IDᵢ,
- ...,
- une information IAVⱼ relative à l'activité vocale de l'utilisateur Uⱼ en association avec l'identifiant IDⱼ,
- ...,
- une information IAVₖ relative à l'activité vocale de l'utilisateur Uₖ en association avec l'identifiant IDₖ,
- ...,
- une information IAV_{N} relative à l'activité vocale de l'utilisateur U_{N} en association avec l'identifiant ID_{N}.

L'information IAVᵢ d'un utilisateur donné Uᵢ prend une première valeur V1 représentative de la présence d'activité vocale de cet utilisateur ou une deuxième valeur V2 représentative de l'absence d'activité vocale de cet utilisateur.

A titre d'exemple, V1=1 et V2=0.

Selon un mode de réalisation, une telle information est déterminée à l'instant courant par le pont de gestion de vidéo conférence PVC, par analyse des paquets audio contenus dans les N flux audio vidéo reçus respectivement en provenance des N terminaux.

Selon un autre mode de réalisation, une telle information est déterminée individuellement à l'instant courant par chacun des N terminaux de communication puis envoyée par chaque terminal au pont de gestion de vidéo conférence PVC qui concatène alors chaque information reçue dans le message M4 en association avec chaque identifiant correspondant.

En S301, le module DAC (figure 2) du terminal TERᵢ extrait la première information IAV₁ du message M4 reçu et détermine si la première information IAV₁ est à la première valeur V1 ou à la deuxième valeur V2, puis recommence ces opérations pour la deuxième information IAV₂ et ainsi de suite jusqu'à l'information IAV_{N}.

Si une seule information IVAⱼ est à la valeur V1, le terminal TERᵢ détermine en S302 si l'information IVAⱼ est à la valeur V1 depuis un instant prédéterminé t_{P}. La durée qui sépare l'instant courant t de l'instant prédéterminé t_{P} est par exemple définie dans la procédure de détection d'activité vocale par un nombre K prédéterminé d'unités de temps de, par exemple, 500ms chacune. Selon un exemple de réalisation K=4.

Si oui, le terminal TERᵢ envoie, en S303, au pont de gestion de vidéo conférence PVC, via le réseau RC, un message M5 de requête du flux audio vidéo Fⱼ associé à l'utilisateur Uⱼ ayant été détecté comme parlant depuis l'instant prédéterminé t_{P}, en tant que flux audio vidéo principal à afficher. Le message M5 contient l'identifiant IDⱼ de l'utilisateur Uⱼ.

En réponse au message M5, le pont de gestion de vidéo conférence PVC envoie au terminal TERᵢ, via le réseau RC, un message M6 contenant le flux audio vidéo principal Fⱼ.

En S304, le flux audio vidéo principal Fⱼ est reçu par le module de réception REC (figure 2) du terminal TERᵢ.

En S305, le flux audio vidéo principal Fⱼ est affiché sur l'écran EC du terminal TERᵢ.

Selon un mode de réalisation préféré, uniquement le flux audio vidéo principal Fⱼ est requis à l'issue de l'opération de détermination S302.

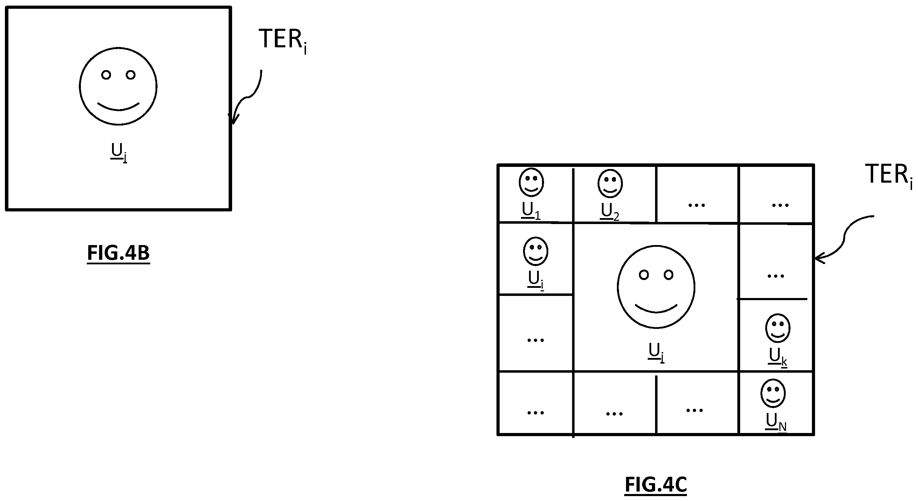

Dans l'exemple représenté sur la figure 4B, le flux audio vidéo Fⱼ est alors affiché en plein écran sur l'écran EC du terminal TERᵢ.

Selon un autre mode de réalisation, le terminal TERᵢ envoie en outre, en S306, au pont de gestion de vidéo conférence PVC, via le réseau RC, un message M7 de requête des N-1 autres flux audio vidéo associés aux N-1 autres utilisateurs qui n'ont pas été détectés comme parlant depuis l'instant prédéterminé t_{P}, en tant que respectivement N-1 flux audio vidéo secondaires à afficher. Le message M7 contient les N-1 autres identifiants associés respectivement aux N-1 autres utilisateurs. En variante de cet autre mode, le terminal TERᵢ pourrait se passer de requérir, en tant que flux audio vidéo secondaire, le flux audio vidéo relatif à l'utilisateur Uᵢ, ce qui permettrait de réduire les ressources en bande passante du réseau de communication RC.

En réponse au message M7, le pont de gestion de vidéo conférence PVC envoie au terminal TERᵢ, via le réseau RC, un message M8 contenant les N-1 flux audio vidéo secondaires.

En S307, les N-1 flux audio vidéo secondaires sont reçus par le module de réception REC (figure 2) du terminal TERᵢ.

En S308, les N-1 flux audio vidéo secondaires sont affichés sur l'écran EC du terminal TERᵢ, de façon moins visible que le flux audio vidéo principal Fⱼ.

Les opérations S306 à S308 sont mises en oeuvre simultanément aux opérations S303 à S305 ou bien à la suite de ces dernières.

Dans l'exemple représenté sur la figure 4C, le flux audio vidéo principal Fⱼ est alors affiché dans une fenêtre disposée par exemple au centre de l'écran EC du terminal TERᵢ, les N-1 flux audio vidéo secondaires étant affichés autour de cette fenêtre, dans des fenêtres de même taille et plus petites que cette dernière.

Selon un mode particulier de réalisation, le terminal TERᵢ peut se passer de requérir en S306 les N-1 flux audio vidéo secondaires. Le message M5 envoyé en S303 pourrait par exemple comprendre une information qui indique au pont de gestion de vidéo conférence PVC s'il renvoie au terminal TERᵢ uniquement le flux audio vidéo principal Fⱼ ou bien le flux audio vidéo principal Fⱼ et les N-1 flux audio vidéo secondaires. Une telle information pourrait être un bit mis par exemple à 1 pour ne requérir que le flux audio vidéo principal ou à 0 pour requérir le flux audio vidéo principal Fⱼ et les N-1 flux audio vidéo secondaires.

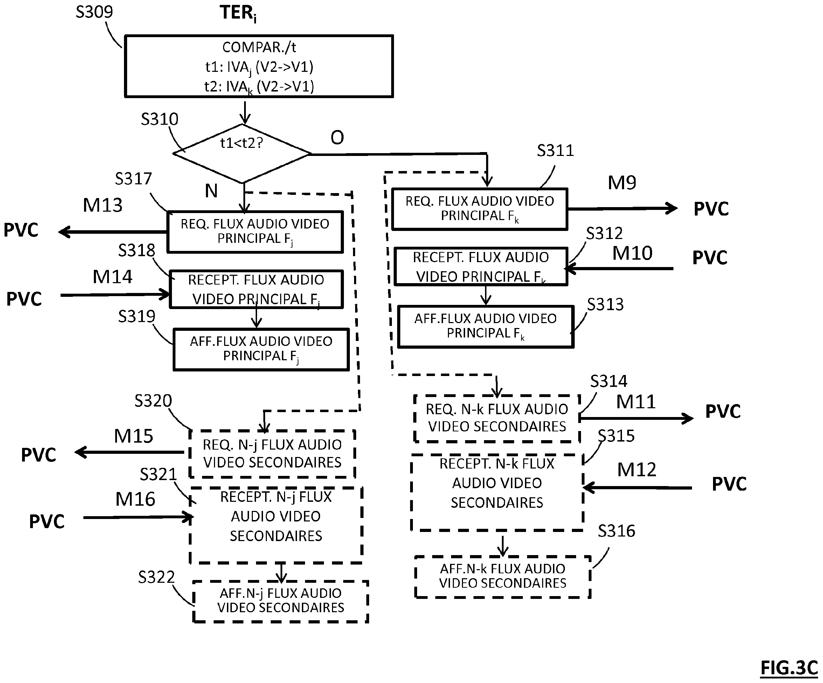

Si à l'issue de l'opération S301, au moins deux informations IVAⱼ et IVAₖ sont à la valeur V1, le terminal TERᵢ met en oeuvre les opérations illustrées en figure 3C.

En référence à la figure 3C, en S309, le module DAC du terminal TERᵢ compare l'instant t1, précédant l'instant courant t, à partir duquel l'information IVAⱼ est passée de la deuxième valeur V2 à la première valeur V1, avec l'instant t2 précédant l'instant courant t, à partir duquel l'information IVAₖ est passée de la deuxième valeur V2 à la première valeur V1.

En S310, le module DAC (figure 2) du terminal TERᵢ sélectionne parmi les instants t1 et t2, celui qui est le plus proche de l'instant courant t.

S'il s'agit de l'instant t2, le terminal TERᵢ envoie, en S311, au pont de gestion de vidéo conférence PVC, via le réseau RC, un message M9 de requête du flux audio vidéo Fₖ associé à l'utilisateur Uₖ ayant été détecté comme parlant depuis l'instant t2 le plus proche de l'instant courant t_{,} en tant que flux audio vidéo principal à afficher. Le message M9 contient l'identifiant IDₖ de l'utilisateur Uₖ.

En réponse au message M9, le pont de gestion de vidéo conférence PVC envoie au terminal TERᵢ, via le réseau RC, un message M10 contenant le flux audio vidéo principal Fₖ.

En S312, le flux audio vidéo principal Fₖ est reçu par le module de réception REC (figure 2) du terminal TERᵢ.

En S313, le flux audio vidéo principal Fₖ est affiché sur l'écran EC du terminal TERᵢ.

Le flux audio vidéo Fₖ est par exemple affiché en plein écran sur l'écran EC du terminal TERᵢ, de la même manière que dans l'exemple de la figure 4B.

Selon un autre mode de réalisation, le terminal TERᵢ envoie en outre, en S314, au pont de gestion de vidéo conférence PVC, via le réseau RC, un message M11 de requête des N-k autres flux audio vidéo associés aux N-k autres utilisateurs en tant que respectivement N-k flux audio vidéo secondaires à afficher. Le message M11 contient les N-k autres identifiants associés respectivement aux N-k autres utilisateurs. En variante de cet autre mode, le terminal TERᵢ pourrait se passer de requérir, en tant que flux audio vidéo secondaire, le flux audio vidéo relatif à l'utilisateur Uᵢ, ce qui permettrait de réduire les ressources en bande passante du réseau de communication RC.

Comme expliqué plus haut en référence à la figure 3A, l'opération S314 pourrait en outre être optionnelle.

En réponse au message M11, le pont de gestion de vidéo conférence PVC envoie au terminal TERᵢ, via le réseau RC, un message M12 contenant les N-k flux audio vidéo secondaires.

En S315, les N-k flux audio vidéo secondaires sont reçus par le module de réception REC (figure 2) du terminal TERᵢ.

En S316, les N-k flux audio vidéo secondaires sont affichés sur l'écran EC du terminal TERᵢ, de façon moins visible que le flux audio vidéo principal Fₖ.

Les opérations S314 à S316 sont mises en oeuvre simultanément aux opérations S311 à S313 ou bien à la suite de ces dernières.

Les N-k flux audio vidéo secondaires sont par exemple affichés sur l'écran EC du terminal TERᵢ, autour de la fenêtre centrale dans laquelle est affiché le flux audio vidéo principal Fₖ, de la même manière que dans l'exemple de la figure 4C.

Si à l'issue de l'opération S301, il s'agit de l'instant t1, le terminal TERᵢ envoie, en S317, au pont de gestion de vidéo conférence PVC, via le réseau RC, un message M13 de requête du flux audio vidéo Fⱼ associé à l'utilisateur Uⱼ ayant été détecté comme parlant depuis l'instant t1 le plus proche de l'instant courant t_{,} en tant que flux audio vidéo principal à afficher. Le message M13 contient l'identifiant IDⱼ de l'utilisateur Uⱼ.

En réponse au message M13, le pont de gestion de vidéo conférence PVC envoie au terminal TERᵢ, via le réseau RC, un message M14 contenant le flux audio vidéo principal Fⱼ.

En S318, le flux audio vidéo principal Fⱼ est reçu par le module de réception REC (figure 2) du terminal TERᵢ.

En S319, le flux audio vidéo principal Fⱼ est affiché sur l'écran EC du terminal TERᵢ.

Le flux audio vidéo Fⱼ est par exemple affiché en plein écran sur l'écran EC du terminal TERᵢ, de la même manière que dans l'exemple de la figure 4B.

Selon un autre mode de réalisation, le terminal TERᵢ envoie en outre, en S320, au pont de gestion de vidéo conférence PVC, via le réseau RC, un message M15 de requête des N-j autres flux audio vidéo associés aux N-j autres utilisateurs en tant que respectivement N-j flux audio vidéo secondaires à afficher. Le message M15 contient les N-j autres identifiants associés respectivement aux N-j autres utilisateurs. En variante de cet autre mode, le terminal TERᵢ pourrait se passer de requérir, en tant que flux audio vidéo secondaire, le flux audio vidéo relatif à l'utilisateur Uᵢ, ce qui permettrait de réduire les ressources en bande passante du réseau de communication RC.

Comme expliqué plus haut en référence à la figure 3A, l'opération S320 pourrait en outre être optionnelle.

En réponse au message M15, le pont de gestion de vidéo conférence PVC envoie au terminal TERᵢ, via le réseau RC, un message M16 contenant les N-j flux audio vidéo secondaires.

En S321, les N-j flux audio vidéo secondaires sont reçus par le module de réception REC (figure 2) du terminal TERᵢ.

En S322, les N-j flux audio vidéo secondaires sont affichés sur l'écran EC du terminal TERᵢ, de façon moins visible que le flux audio vidéo principal Fⱼ.

Les opérations S320 à S322 sont mises en oeuvre simultanément aux opérations S317 à S319 ou bien à la suite de ces dernières.

Les N-j flux audio vidéo secondaires sont par exemple affichés sur l'écran EC du terminal TERᵢ, autour de la fenêtre centrale dans laquelle est affiché le flux audio vidéo principal Fⱼ, de la même manière que dans l'exemple de la figure 4C.

En référence à nouveau à la figure 3B, si en S301, le module DAC (figure 2) du terminal TERᵢ détermine qu'aucune des informations IAV₁, IAV₂, ..., IAVᵢ, ..., IAV_{N} du message M4 reçu sont à la première valeur V1 depuis l'instant prédéterminé t_{P}, le module DAC détermine en S323 si les informations IAV₁, IAV₂,..., IAVᵢ, ..., IAV_{N} du message M4 reçu sont à la deuxième valeur V2 depuis l'instant prédéterminé t_{P}.

Si tel est le cas, le terminal TERᵢ ne requiert aucun flux audio vidéo à afficher auprès du pont de gestion de vidéo conférence PVC. Dans le cas où un unique flux audio vidéo Fⱼ était affiché à l'instant précédent t-1 sur l'écran EC du terminal TERᵢ, en S324, le flux Fⱼ continue d'être affiché de la même façon à l'instant courant t, comme représenté sur la figure 4B. Dans le cas où à l'instant t-1, le flux audio vidéo Fⱼ était affiché en tant que flux principal, avec les N-j flux audio vidéo secondaires affichés autour du flux audio vidéo Fⱼ, comme représenté sur la figure 4C, ces N flux audio vidéo continuent, en S324, d'être affichés de la même façon à l'instant courant t.

Si en S323, le module DAC du terminal TERᵢ détermine que toutes les informations IAV₁, IAV₂, IAVᵢ, ..., IAV_{N} du message M4 reçu ne sont pas à la deuxième valeur V2 depuis l'instant prédéterminé t_{P}, il est mis fin au procédé de détection d'activité vocale et le terminal TERᵢ se met en attente de la réception à l'instant suivant t+1 d'un nouveau message, en provenance du pont de gestion de vidéo conférence PVC, qui contienne de nouvelles informations d'activité vocale IAV₁, IAV₂,..., IAVᵢ, ..., IAV_{N} relatives respectivement aux N utilisateurs.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention telle qu'elle est définie dans les revendications ci-jointes.

## Revendications

1. Procédé de communication par vidéo conférence entre N terminaux de communication, tel que N>2, associés respectivement à N utilisateurs, **caractérisé en ce qu'**il met en oeuvre ce qui suit, au niveau d'un premier terminal de communication (TER,) parmi lesdits N terminaux:
- recevoir (S300), en provenance d'un dispositif (PVC) de traitement de N flux audio vidéo émis respectivement par lesdits N terminaux, N informations (IAV;IAV2, IAVÎ, ..., IAVn) relatives respectivement à l'activité vocale des N utilisateurs et associées respectivement à N identifiants (ID1 ;ID2, ..., ID,,..., IDN) relatifs auxdits N utilisateurs correspondants, chacune des N informations prenant une première valeur (V1 ) représentative de la présence d'activité vocale ou une deuxième valeur (V2) représentative de l'absence d'activité vocale,
- pour au moins un (Uj) des N utilisateurs, si ladite information reçue (IAVj) est à la première valeur depuis une première durée, requérir (S303) auprès du dispositif de traitement, en utilisant l'identifiant utilisateur correspondant audit au moins un des N utilisateurs, un flux audio vidéo (Fj) associé audit au moins un des N utilisateurs, en tant que flux audio vidéo principal à afficher,
- recevoir (S304) le flux audio vidéo principal requis,
- afficher (S305) le flux audio vidéo reçu en tant que flux audio vidéo principal.

2. Procédé de communication selon la revendication 1, comprenant ce qui suit :
- si pour au moins deux premier et deuxième utilisateurs (Uj, Uk) parmi lesdits N utilisateurs, l'information d'activité vocale reçue correspondante est à la première valeur depuis ladite première durée,
• requérir (S311 ou S317) auprès du dispositif de traitement, en tant que flux audio vidéo principal à afficher, un flux audio vidéo associé à celui des premier et deuxième utilisateurs pour lequel l'information est passée de la deuxième valeur à la première valeur à l'instant le plus récent parmi l'instant (t1 ) à partir duquel l'information (IAVj) reçue pour le premier utilisateur (Uj) est passée de la deuxième valeur à la première valeur et l'instant (t2) à partir duquel l'information (lAVk) reçue pour le deuxième utilisateur (Uk) est passée de la deuxième valeur à la première valeur, en utilisant l'identifiant utilisateur correspondant,
• recevoir (S312 ou S318) le flux audio vidéo principal requis,
• afficher (S313 ou S319) le flux audio vidéo reçu en tant que flux audio vidéo principal.

3. Procédé de communication selon la revendication 1 ou la revendication 2, comprenant ce qui suit :
- recevoir (S307), en provenance du dispositif de traitement de flux audio vidéo, N-1 flux audio vidéo associés respectivement aux N-1 utilisateurs restants, en tant que N-1 flux audio vidéo secondaires à afficher,
- afficher (S308) lesdits N-1 flux audio vidéo secondaires simultanément au flux audio vidéo principal.

4. Procédé de communication selon la revendication 1 ou la revendication 2, dans lequel uniquement le flux audio vidéo principal est reçu et affiché par ledit premier terminal de communication.

5. Procédé de communication selon l'une quelconque des revendications 1 à 4, dans lequel si il est déterminé que l'information reçue relative à l'activité vocale de chacun des N utilisateurs est à la deuxième valeur représentative de l'absence d'activité vocale, depuis une certaine durée, le flux audio vidéo principal affiché avant la détermination continue d'être affiché (S324).

6. Terminal (TER,) de communication par vidéo conférence avec au moins un autre terminal de communication, lesdits deux terminaux appartenant à un ensemble de N terminaux de communication, tel que N>2, associés respectivement à N utilisateurs, ledit terminal étant **caractérisé en ce qu'**il comprend un module de traitement (MT) qui est agencé pour :
- recevoir, en provenance d'un dispositif (PVC) de traitement de N flux audio vidéo émis respectivement par lesdits N terminaux, N informations relatives respectivement à l'activité vocale des N utilisateurs et associées respectivement à N identifiants relatifs auxdits N utilisateurs correspondants, chacune des N informations prenant une première valeur représentative de la présence d'activité vocale ou une deuxième valeur représentative de l'absence d'activité vocale,
- pour au moins un des N utilisateurs, si ladite information reçue est à la première valeur depuis une première durée, requérir auprès du dispositif de traitement, en utilisant l'identifiant utilisateur correspondant audit au moins un des N utilisateurs, un flux audio vidéo associé audit au moins un des N utilisateurs, en tant que flux audio vidéo principal à afficher,
- recevoir le flux audio vidéo principal requis,
- afficher le flux audio vidéo reçu en tant que flux audio vidéo principal.

7. Terminal de communication selon la revendication 6, ledit module de traitement (MT) mettant en oeuvre ce qui suit :
- si pour au moins deux premier et deuxième utilisateurs parmi lesdits N utilisateurs, l'information d'activité vocale reçue correspondante est à la première valeur depuis ladite première durée,
• requérir auprès du dispositif de traitement, en tant que flux audio vidéo principal à afficher, un flux audio vidéo associé à celui des premier et deuxième utilisateurs pour lequel l'information est passée de la deuxième valeur à la première valeur à l'instant le plus récent parmi l'instant à partir duquel l'information reçue pour le premier utilisateur est passée de la deuxième valeur à la première valeur et l'instant à partir duquel l'information reçue pour le deuxième utilisateur est passée de la deuxième valeur à la première valeur, en utilisant l'identifiant utilisateur correspondant,
• recevoir le flux audio vidéo principal requis,
• afficher le flux audio vidéo reçu en tant que flux audio vidéo principal.

8. Terminal de communication selon la revendication 6 ou la revendication 7, ledit module de traitement (MT) mettant en oeuvre ce qui suit :
- recevoir, en provenance du dispositif de traitement de flux audio vidéo, N-1 flux audio vidéo associés respectivement aux N-1 utilisateurs restants, en tant que N-1 flux audio vidéo secondaires à afficher,
- afficher lesdits N-1 flux audio vidéo secondaires simultanément au flux audio vidéo principal.

9. Terminal de communication selon la revendication 6 ou la revendication 7, dans lequel uniquement le flux audio vidéo principal est reçu et affiché.

10. Terminal de communication selon l'une quelconque des revendications 6 à 9, dans lequel si le module de traitement détermine que l'information reçue relative à l'activité vocale de chacun des N utilisateurs est à la deuxième valeur représentative de l'absence d'activité vocale, depuis une certaine durée, le flux audio vidéo principal affiché avant ladite détermination continue d'être affiché.

11. Programme d'ordinateur comportant des instructions qui implémentent le procédé de communication selon l'une quelconque des revendications 1 à 5, lorsque ledit programme est exécuté sur un ordinateur.

12. Support d'enregistrement lisible par un ordinateur sur lequel est enregistré un programme d'ordinateur comprenant des instructions qui implémentent le procédé de de communication selon l'une quelconque des revendications 1 à 5, lorsque ledit programme est exécuté par un ordinateur.

## Patentansprüche

1. Kommunikationsverfahren durch Videokonferenz zwischen N Kommunikationsendgeräten, z.B. N>2, die N Benutzern zugeordnet sind, **dadurch gekennzeichnet, dass** es im Bereich eines ersten Kommunikationsendgeräts (TERᵢ) unter den N Endgeräten Folgendes durchführt:
- Empfang (S300), von einer Verarbeitungsvorrichtung (PVC) von von den N Endgeräten gesendeten N Audio-/Videoströmen, von N Informationen (IAV; IAV2, IAVÎ, ..., IAVn) bezüglich der Sprachaktivität der N Benutzer und N Kennungen (ID1 ;ID2, ..., IDᵢ, ..., IDN) bezüglich der entsprechenden N Benutzer zugeordnet, wobei jede der N Informationen einen ersten Wert (V1), der für das Vorhandensein einer Sprachaktivität repräsentativ ist, oder einen zweiten Wert (V2) annimmt, der für die Abwesenheit von Sprachaktivität repräsentativ ist,
- für mindestens einen (Uⱼ) der N Benutzer, wenn die empfangene Information (IAVⱼ) seit einer ersten Dauer auf dem ersten Wert ist, Anforderung (S303) bei der Verarbeitungsvorrichtung, unter Verwendung der Benutzerkennung entsprechend dem mindestens einen der N Benutzer, eines dem mindestens einen der N Benutzer zugeordneten Audio-/Videostroms (Fj) als anzuzeigender Haupt-Audio-/Videostrom,
- Empfang (S304) des angeforderten Haupt-Audio-/Videostroms,
- Anzeige (S305) des empfangenen Audio-/Videostroms als Haupt-Audio-/Videostrom.

2. Kommunikationsverfahren nach Anspruch 1, das Folgendes enthält:
- wenn für mindestens zwei erste und zweite Benutzer (Uj, Uk) unter den N Benutzern die entsprechende empfangene Sprachaktivitätsinformation seit der ersten Dauer auf dem ersten Wert ist,
• Anforderung (S311 oder S317) bei der Verarbeitungsvorrichtung, als anzuzeigender Haupt-Audio-/Videostrom, eines Audio-/Videostroms, der demjenigen der ersten und zweiten Benutzer zugeordnet ist, für den die Information zum jüngsten Zeitpunkt unter dem Zeitpunkt (t1), ausgehend von dem die für den ersten Benutzer (Uj) empfangene Information (IAVj) vom zweiten zum ersten Wert übergegangen ist, und dem Zeitpunkt (t2), ausgehend von dem die für den zweiten Benutzer (Uk) empfangene Information (IAVk) vom zweiten Wert auf den ersten Wert übergegangen ist, vom zweiten Wert zum ersten Wert übergegangen ist, unter Verwendung der entsprechenden Benutzerkennung,
• Empfang (S312 oder S318) des angeforderten Haupt-Audio-/Videostroms,
• Anzeige (S313 oder S319) des empfangenen Audio-/Videostroms als Haupt-Audio-/Videostrom.

3. Kommunikationsverfahren nach Anspruch 1 oder Anspruch 2, das Folgendes enthält:
- Empfang (S307), von der Verarbeitungsvorrichtung des Audio-/Videostroms, von den verbleibenden N-1 Benutzern zugeordneten N-1 Audio-/Videoströmen als anzuzeigende N-1 Sekundär-Audio-/Videoströme,
- Anzeige (S308) der N-1 Sekundär-Audio-/Videoströme gleichzeitig mit dem Haupt-Audio-/Videostrom.

4. Kommunikationsverfahren nach Anspruch 1 oder Anspruch 2, wobei nur der Haupt-Audio-/Videostrom vom ersten Kommunikationsendgerät empfangen und angezeigt wird.

5. Kommunikationsverfahren nach einem der Ansprüche 1 bis 4, wobei, wenn bestimmt wird, dass die empfangene Information bezüglich der Sprachaktivität jedes der N Benutzer seit einer bestimmten Dauer auf dem für die Abwesenheit von Sprachaktivität repräsentativen zweiten Wert ist, der vor der Bestimmung angezeigte Haupt-Audio-/Videostrom weiter angezeigt wird (S324).

6. Endgerät (TERᵢ) zur Kommunikation durch Videokonferenz mit mindestens einem anderen Kommunikationsendgerät, wobei die zwei Endgeräte zu einer Einheit von N Kommunikationsendgeräten gehören, z.B. N>2, die N Benutzern zugeordnet sind, wobei das Endgerät **dadurch gekennzeichnet ist, dass** es ein Verarbeitungsmodul (MT) enthält, das eingerichtet ist, um:
- von einer Verarbeitungsvorrichtung (PVC) von N Audio-/Videoströmen, die von den N Endgeräten gesendet werden, N Informationen zu empfangen, die sich auf die Sprachaktivität der N Benutzer beziehen und N Kennungen bezüglich der entsprechenden N Benutzer zugeordnet sind, wobei jede der N Informationen einen für das Vorhandensein von Sprachaktivität repräsentativen ersten Wert oder einen für die Abwesenheit von Sprachaktivität repräsentativen zweiten Wert annimmt,
- für mindestens einen der N Benutzer, wenn die empfangene Information seit einer bestimmten Dauer auf dem ersten Wert ist, bei der Verarbeitungsvorrichtung unter Verwendung der dem mindestens einen der N Benutzer entsprechenden Benutzerkennung einen dem mindestens einen der N Benutzer zugeordneten Audio-/Videostrom als anzuzeigender Haupt-Audio-/Videostrom anzufordern,
- den angeforderten Haupt-Audio-/Videostrom zu empfangen,
- den empfangenen Audio-/Videostrom als Haupt-Audio-/Videostrom anzuzeigen.

7. Kommunikationsendgerät nach Anspruch 6, wobei das Verarbeitungsmodul (MT) Folgendes durchführt:
- wenn für mindestens zwei erste und zweite Benutzer unter den N Benutzern die entsprechende empfangene Sprachaktivitätsinformation seit der ersten Dauer auf dem ersten Wert ist,
• Anforderung bei der Verarbeitungsvorrichtung, als anzuzeigender Haupt-Audio-/Videostrom, eines Audio-/Videostroms, der demjenigen der ersten und zweiten Benutzer zugeordnet ist, für den die Information zum jüngsten Zeitpunkt unter dem Zeitpunkt, ausgehend von dem die für den ersten Benutzer empfangene Information vom zweiten zum ersten Wert übergegangen ist, und dem Zeitpunkt, ausgehend von dem die für den zweiten Benutzer empfangene Information vom zweiten Wert zum ersten Wert übergegangen ist, vom zweiten Wert zum ersten Wert übergegangen ist, unter Verwendung der entsprechenden Benutzerkennung,
• Empfang des angeforderten Haupt-Audio-/Videostroms,
• Anzeige des Audio-/Videostroms als Haupt-Audio-/Videostrom.

8. Kommunikationsendgerät nach Anspruch 6 oder Anspruch 7, wobei das Verarbeitungsmodul (MT) Folgendes durchführt:
- Empfang, von der Verarbeitungsvorrichtung eines Audio-/Videostroms, von N-1 Audio-/Videoströmen, die den verbleibenden N-1 Benutzern zugeordnet sind, als anzuzeigende N-1 Sekundär-Audio-/Videoströme,
- Anzeige der N-1 Sekundär-Audio-/Videoströme gleichzeitig mit dem Haupt-Audio-/Videostrom.

9. Kommunikationsendgerät nach Anspruch 6 oder Anspruch 7, wobei nur der Haupt-Audio-/Videostrom empfangen und angezeigt wird.

10. Kommunikationsendgerät nach einem der Ansprüche 6 bis 9, wobei, wenn das Verarbeitungsmodul bestimmt, dass die empfangene Information bezüglich der Sprachaktivität jedes der N Benutzer seit einer bestimmten Dauer auf dem für die Abwesenheit von Sprachaktivität repräsentativen zweiten Wert ist, der vor der Bestimmung angezeigte Haupt-Audio-/Videostrom weiter angezeigt wird.

11. Computerprogramm, das Anweisungen aufweist, die das Kommunikationsverfahren nach einem der Ansprüche 1 bis 5 implementieren, wenn das Programm auf einem Computer ausgeführt wird.

12. Computerlesbarer Speicherträger, auf dem ein Computerprogramm gespeichert ist, das Anweisungen enthält, die das Kommunikationsverfahren nach einem der Ansprüche 1 bis 5 implementieren, wenn das Programm von einem Computer ausgeführt wird.

## Claims

1. Communication method for communicating by video conference between N communication terminals, such that N>2, respectively associated with N users, **characterized in that** it implements the following, on a first communication terminal (TER,) from among said N terminals:
- receive (S300), from a device (PVC) for processing N audio video streams respectively transmitted by said N terminals, N information items (IAV;IAV2, IAVÎ, ..., IAVn) that respectively relate to the voice activity of the N users and are respectively associated with N identifiers (ID1; ID2, ..., ID,, ..., IDN) relating to said N corresponding users, each of the N information items taking a first value (V1) representative of the presence of voice activity or a second value (V2) representative of the absence of voice activity,
- for at least one (Uj) of the N users, if said received information item (IAVj) has been at the first value for a first period of time, request (S303) from the processing device, by using the user identifier corresponding to said at least one of the N users, an audio video stream (Fj) associated with said at least one of the N users, as main audio video stream to be displayed,
- receive (S304) the main audio video stream requested,
- display (S305) the audio video stream received as main audio video stream.

2. Communication method according to Claim 1, comprising the following:
- if, for at least two first and second users (Uj, Uk) from among said N users, the corresponding voice activity information item received has been at the first value for said first period of time,
• request (S311 or S317) from the processing device, as main audio video stream to be displayed, an audio video stream associated with that of the first and second users for which the information item changed from the second value to the first value at the more recent instant from among the instant (t1) from which the information item (IAVj) received for the first user (Uj) changed from the second value to the first value and the instant (t2) from which the information item (IAVk) received for the second user (Uk) changed from the second value to the first value, by using the corresponding user identifier,
• receive (S312 or S318) the main audio video stream requested,
• display (S313 or S319) the audio video stream received as main audio video stream.

3. Communication method according to Claim 1 or Claim 2, comprising the following:
- receive (S307), from the audio video stream processing device, N-1 audio video streams respectively associated with the N-1 remaining users, as N-1 secondary audio video streams to be displayed,
- display (S308) said N-1 secondary audio video streams simultaneously with the main audio video stream.

4. Communication method according to Claim 1 or Claim 2, in which only the main audio video stream is received and displayed by said first communication terminal.

5. Communication method according to any one of Claims 1 to 4, in which if it is determined that the information item received relating to the voice activity of each of the N users has been at the second value representative of the absence of voice activity for a certain period of time, the main audio video stream displayed before the determination continues to be displayed (S324).

6. Communication terminal (TER,) for communicating by video conference with at least one other communication terminal, said two terminals belonging to a set of N communication terminals, such that N>2, respectively associated with N users, said terminal being **characterized in that** it comprises a processing module (MT) which is designed to:
- receive, from a device (PVC) for processing N audio video streams respectively transmitted by said N terminals, N information items that respectively relate to the voice activity of the N users and are respectively associated with N identifiers relating to said N corresponding users, each of the N information items taking a first value representative of the presence of voice activity or a second value representative of the absence of voice activity,
- for at least one of the N users, if said received information item has been at the first value for a first period of time, request from the processing device, by using the user identifier corresponding to said at least one of the N users, an audio video stream associated with said at least one of the N users, as main audio video stream to be displayed,
- receive the main audio video stream requested,
- display the audio video stream received as main audio video stream.

7. Communication terminal according to Claim 6, said processing module (MT) implementing the following:
- if, for at least two first and second users from among said N users, the corresponding voice activity information item received has been at the first value for said first period of time,
• request from the processing device, as main audio video stream to be displayed, an audio video stream associated with that of the first and second users for which the information item changed from the second value to the first value at the more recent instant from among the instant from which the information item received for the first user changed from the second value to the first value and the instant from which the information item received for the second user changed from the second value to the first value, by using the corresponding user identifier,
• receive the main audio video stream requested,
• display the audio video stream received as main audio video stream.

8. Communication terminal according to Claim 6 or Claim 7, said processing module (MT) implementing the following:
- receive, from the audio video stream processing device, N-1 audio video streams respectively associated with the N-1 remaining users, as N-1 secondary audio video streams to be displayed,
- display said N-1 secondary audio video streams simultaneously with the main audio video stream.

9. Communication terminal according to Claim 6 or Claim 7, in which only the main audio video stream is received and displayed.

10. Communication terminal according to any one of Claims 6 to 9, in which if the processing module determines that the information item received relating to the voice activity of each of the N users has been at the second value representative of the absence of voice activity for a certain period of time, the main audio video stream displayed before said determination continues to be displayed.

11. Computer program comprising instructions which implement the communication method according to any one of Claims 1 to 5 when said program is executed on a computer.

12. Recording medium readable by a computer on which is recorded a computer program comprising instructions which implement the communication method according to any one of Claims 1 to 5 when said program is executed by a computer.
